# EUROPEAN PATENT APPLICATION

(11) **EP 4 641 061 A1**
(43) Date of publication of application: **29.10.2025**
(21) Application number: 23906829.9
(22) Date of filing: 12.12.2023
(51) Int. Cl.: F16L 15/04, E21B 43/00

(54) **OIL-WELL METAL PIPE**

(30) Priority: 23.12.2022 JP 2022206456
(71) Applicant: NIPPON STEEL CORPORATION, Chiyoda-ku Tokyo 100-8071 (JP); Vallourec Oil and Gas France, 59620 Aulnoye-Aymeries (FR)
(72) Inventor: AKIOKA, Koji, Tokyo 100-8071 (JP); MATSUYAMA, Tomoya, Tokyo 100-8071 (JP); KURANISHI, Takao, Tokyo 100-8071 (JP); YAMAOKA, Ikuro, Tokyo 100-0006 (JP)
(74) Representative: J A Kemp LLP
(86) International application number: PCT/JP2023/044467
(87) International publication number: WO 2024/135464

(57) **Abstract**

An oil-well metal pipe having excellent galling resistance and, in addition, being capable of keeping resistance of a threaded connection to being loosened even in a case where fastening and loosening are repeated is provided. An oil-well metal pipe (1) according to the present disclosure includes a pipe body (10) including a first end portion (10A) and a second end portion (10B). The pipe body (10) includes a pin (40) formed on the first end portion (10A) and a box (50) formed on the second end portion (10B). The pin (40) includes a pin contact surface (400) including an external thread part (41). The box (50) includes a box contact surface (500) including an internal thread part (51). The oil-well metal pipe (1) further includes a resin coating (100) formed as an uppermost layer on the pin contact surface (400) and/or on the box contact surface (500). The resin coating (100) contains epoxy resin and organic carboxylic acid.

## Description

### TECHNICAL FIELD

The present disclosure relates to an oil-well metal pipe.

### BACKGROUND ART

In oil wells and natural gas wells (hereinafter, oil wells and natural gas wells will be collectively referred to as "oil wells"), oil-well metal pipes are used. Specifically, at a site of drilling an oil well, a plurality of oil-well metal pipes are connected together to form an oil-country-tubular-goods connected body typified by a casing pipe and a tubing pipe. An oil-country-tubular-goods connected body is formed by fastening threaded connections formed on oil-well metal pipes. An oil-country-tubular-goods connected body is subjected to the inspection in some cases. In a case where the inspection is conducted, the oil-country-tubular-goods connected body is drawn up and loosened. Then, oil-well metal pipes are detached from the oil-country-tubular-goods connected body by the loosening and are subjected to the inspection. After the inspection, threaded connections of the oil-well metal pipe are fastened together again and reused as parts of an oil-country-tubular-goods connected body.

A threaded connection formed on an oil-well metal pipe includes a pin and a box. The pin includes, on an outer peripheral surface of an end portion of the oil-well metal pipe, a pin contact surface including an external thread part. The box includes, on an inner peripheral surface of an end portion of the oil-well metal pipe, a box contact surface including an internal thread part. The external thread part and the internal thread part will be herein collectively referred to also as a "thread part". The pin contact surface and the box contact surface will be herein collectively referred to also as a "contact surface". The pin contact surface may further include a pin unthreaded metal contact portion that includes a pin seal surface and a pin shoulder surface. Likewise, a box contact surface may further include a box unthreaded metal contact portion that includes a box seal surface and a box shoulder surface.

When a threaded connection formed on an oil-well metal pipe is fastened or loosened, the contact surface repeatedly receives strong friction. Therefore, in a case where the fastening and the loosening are repeated, galling (unrepairable galling) tends to occur on the contact surface. Therefore, oil-well metal pipes are required to have sufficient durability against friction, namely, excellent galling resistance.

In conventional practices, to improve galling resistance of an oil-well metal pipe, compound grease called dope, which contains heavy metal powder, has been used. Galling resistance of an oil-well metal pipe can be improved by applying compound grease on its contact surface. However, the heavy metal powder such as Pb, Zn, and Cu contained in compound grease may have an influence on the environment. For this reason, there is a demand for developing an oil-well metal pipe that is excellent in galling resistance without compound grease.

Techniques for increasing galling resistance of an oil-well metal pipe are proposed in Japanese Patent Application Publication No. 2002-348587 (Patent Literature 1) and International Application Publication No. WO2006/104251 (Patent Literature 2).

An oil-well metal pipe disclosed in Patent Literature 1 includes a solid lubricant coating that is made of lubricant powder and binder and is formed on a contact surface of its pin and/or its box. The lubricant powder is made of graphite powder and one or two types selected from molybdenum disulfide powder and tungsten disulfide powder. The graphite powder accounts for 2 to 20 mass% of the lubricant powder. Patent Literature 1 discloses that the oil-well metal pipe is capable of increasing galling resistance of an oil-well metal pipe.

An oil-well metal pipe disclosed in Patent Literature 2 is characterized by including a viscous-liquid or semisolid lubricant coating on a contact surface of its pin and/or its box and including a dried solid coating formed on the lubricant coating. Patent Literature 2 discloses that the oil-well metal pipe is capable of preventing occurrence of rust and increasing galling resistance and gastightness without use of compound grease.

### CITATION LIST

### PATENT LITERATURE

Patent Literature 1: Japanese Patent Application Publication No. 2002-348587
Patent Literature 2: International Application Publication No. WO2006/104251

### SUMMARY OF INVENTION

### TECHNICAL PROBLEM

If a threaded connection is loosened, gastightness of the threaded connection can be decreased. Therefore, there is a demand for a threaded connection that not only has excellent galling resistance but also resists being loosened. Further, as described above, a threaded connection is repeatedly fastened and loosened for inspection. The resistance of a threaded connection to being loosened is preferably kept even after fastening and loosening are repeated.

By the techniques disclosed in Patent Literature 1 and Patent Literature 2, galling resistance of an oil-well metal pipe can be increased. However, Patent Literature 1 and Patent Literature 2 do not even consider striking a balance between galling resistance and resistance of a threaded connection to being loosened.

An objective of the present disclosure is to provide an oil-well metal pipe that has excellent galling resistance and, in addition, is capable of keeping resistance of a threaded connection to being loosened even in a case where fastening and loosening are repeated.

### SOLUTION TO PROBLEM

An oil-well metal pipe according to the present disclosure includes
a pipe body that includes a first end portion and a second end portion, wherein
the pipe body includes:
   a pin that is formed at the first end portion; and
   a box that is formed at the second end portion,
the pin includes a pin contact surface that includes an external thread part,
the box includes a box contact surface that includes an internal thread part,
the oil-well metal pipe further includes
a resin coating formed as an uppermost layer on the pin contact surface and/or on the box contact surface, and
the resin coating contains:
   epoxy resin; and
   organic carboxylic acid.

### ADVANTAGEOUS EFFECTS OF INVENTION

The oil-well metal pipe according to the present disclosure has excellent galling resistance and, in addition, is capable of keeping resistance of its threaded connection to being loosened even in a case where fastening and loosening are repeated.

### BRIEF DESCRIPTION OF DRAWINGS

[FIG. 1] FIG. 1 is a graph illustrating results of the Bowden test on resin coatings containing epoxy resin.
[FIG. 2] FIG. 2 is a side view of an oil-well metal pipe according to the present embodiment.
[FIG. 3] FIG. 3 is a fragmentary sectional view illustrating a cross section of the oil-well metal pipe illustrated in FIG. 2 parallel to a pipe axis direction of the coupling (longitudinal section).
[FIG. 4] FIG. 4 is a sectional view of a vicinity of a pin of the oil-well metal pipe illustrated in FIG. 3, the sectional view being parallel to the pipe axis direction of the oil-well metal pipe.
[FIG. 5] FIG. 5 is a sectional view of a vicinity of a box of the oil-well metal pipe illustrated in FIG. 3, the sectional view being parallel to the pipe axis direction of the oil-well metal pipe.
[FIG. 6] FIG. 6 is a fragmentary sectional view including a longitudinal section of an oil-well metal pipe in the present embodiment, the oil-well metal pipe having another configuration and being different from that illustrated in FIG. 2.
[FIG. 7] FIG. 7 is a fragmentary sectional view including a longitudinal section of the oil-well metal pipe of integral type according to the present embodiment.
[FIG. 8] FIG. 8 is a sectional view of a vicinity of a pin contact surface of the oil-well metal pipe according to the present embodiment.
[FIG. 9] FIG. 9 is a sectional view of a vicinity of a box contact surface corresponding to FIG. 8.
[FIG. 10] FIG. 10 is an enlarged view of a pin contact surface according to the present embodiment different from the pin contact surface illustrated in FIG. 8.
[FIG. 11] FIG. 11 is a sectional view of a vicinity of a box contact surface corresponding to FIG. 10.
[FIG. 12] FIG. 12 is an enlarged view of a pin contact surface according to the present embodiment different from the pin contact surface illustrated in FIG. 8 and FIG. 10.
[FIG. 13] FIG. 13 is a sectional view of a vicinity of a box contact surface corresponding to FIG. 12.

### DESCRIPTION OF EMBODIMENT

The present embodiment will be described below in detail with reference to the accompanying drawings. The same or equivalent parts in the drawings will be denoted by the same reference numerals, and description of the parts will not be repeated.

The present inventors conducted in-depth studies about a method for striking a balance between excellent galling resistance and resistance to being loosened of an oil-well metal pipe. As a result, the following finding was obtained.

It is known that, in contact between metals, the metals tend to suffer galling significantly if a friction coefficient between them is more than 0.40, for example. When a friction coefficient between contact surfaces is low, the galling can be prevented. For example, when a conventional API dope is used, a friction coefficient between contact surfaces becomes about 0.05 to 0.20. In this case, galling of the contact surface can be prevented. In conventional studies, a method for decreasing a friction coefficient between contact surfaces is proposed as a method for increasing galling resistance.

A low friction coefficient between contact surfaces makes it easy for a pin contact surface and a box contact surface to slide on each other. In this case, the thread easily rotates in both a direction of fastening and a direction of loosening. The present inventors considered that, although decreasing a friction coefficient between contact surfaces can increase galling resistance, a thread still remains easy to loosen only by the decreasing. The present inventors considered that a balance between excellent galling resistance and resistance to being loosened can be struck if a friction coefficient between contact surfaces can be kept so low as to increase galling resistance and kept so high as to make the thread resist being loosened. The present inventors thus conducted studies about a method for keeping a friction coefficient between contact surfaces within a range that enables increasing galling resistance of a threaded connection and resistance of the threaded connection to being loosened.

Conceivable methods of adjusting a friction coefficient between contact surfaces include a method of adjusting a friction coefficient between contact surfaces itself and a method of forming a coating on a contact surface and adjusting a friction coefficient of the coating. A contact surface includes a thread part. The thread part has a complex shape in which thread ridges and thread grooves are alternately disposed in an axial direction of an oil-well metal pipe. With consideration given to industrial production, it is difficult to adjust a friction coefficient of a contact surface itself, which includes a thread part having such a complex shape. The present inventors thus conducted studies about a method of forming a coating on a contact surface and adjusting a friction coefficient of the coating.

As the coating formed on the contact surface, a resin coating is known. The present inventors considered that when appropriate resin is contained in the resin coating, a friction coefficient of the resin coating can be adjusted within a range that enables increasing galling resistance and resistance of the thread to being loosened.

The present inventors first conducted studies about resin to be contained in the resin coating. The present inventors considered that when resin that has high adhesiveness to metal is contained in the resin coating, the resin coating can be prevented from being peeled off even when shearing force occurs by fastening. If a resin coating is prevented from being peeled off, it is easy to adjust a friction coefficient between contact surfaces even after fastening and loosening are repeated. The present inventors thus conducted studies about resin having high adhesiveness to metal. As a result, the following findings were obtained.

Epoxy resin is thermosetting synthetic resin that has reactive epoxy groups at terminals of its molecular chain. Typical epoxy resin is bisphenol-A epoxy resin. The bisphenol-A epoxy resin has a secondary hydroxyl group in its repeat unit. Epoxy resin has high adhesiveness to metal compared with other resin. Although the reason why epoxy resin has high adhesiveness to metal is unclear, there are two possible reasons described below. (1) Hydroxyl groups in epoxy resin form hydrogen bonds with hydroxyl groups on a surface of the metal. (2) As to adhesiveness to iron and zinc, phenoxy groups act on an adhesive interface.

The present inventors considered that when epoxy resin is contained in the resin coating, peeling off of the resin coating can be prevented even after fastening and loosening are repeated, and thus the friction coefficient is easily adjusted. The present inventors thus conducted studies about a method of adjusting a friction coefficient of the resin coating containing epoxy resin. Specifically, various additives were added to the resin coating containing epoxy resin, and the friction coefficient of the resin coating was investigated. As a result, the present inventors found that the friction coefficient can be adjusted within a range that enables increasing galling resistance and resistance of a thread to being loosened by making the resin coating containing epoxy resin contain organic carboxylic acid, which is different from conventional findings.

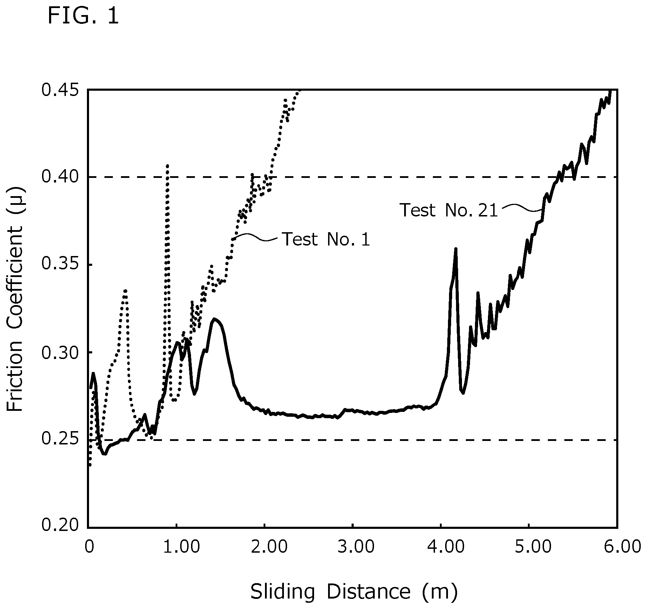

FIG. 1 is a graph illustrating results of the Bowden test on resin coatings containing epoxy resin. FIG. 1 was obtained from Example, which will be described later. In FIG. 1, its abscissa indicates sliding distance (m). In FIG. 1, its ordinate indicates friction coefficient (µ). In FIG. 1, Test No. 1 indicates a chart illustrating a result of the Bowden test on a steel sheet including a resin coating that contains epoxy resin and does not contain organic carboxylic acid. Test No. 21 indicates a chart illustrating a result of the Bowden test on a steel sheet including a resin coating that contains epoxy resin and organic carboxylic acid.

As described above, a friction coefficient being more than 0.40 makes a threaded connection tend to suffer galling. On the other hand, a friction coefficient being less than 0.25 is too low. In this case, the threaded connection is easily loosened. Therefore, it can be said that the friction coefficient range of 0.25 to 0.40 is a friction coefficient range that increases galling resistance of a threaded connection and makes the threaded connection resist being loosened. That is, when a sliding distance in the Bowden test is long at a friction coefficient within the range of 0.25 to 0.40, it can be said that a threaded connection has excellent galling resistance and further can keep resistance of a threaded connection to being loosened even in a case where fastening and loosening are repeated.

Referring to FIG. 1, according to the chart of Test No. 21, its sliding distance at a friction coefficient within the range of 0.25 to 0.40 was long compared with the chart of Test No. 1. This means that an oil-well metal pipe including the resin coating of Test No. 21 can strike a balance between excellent galling resistance and resistance to being loosened. The resin coating of Test No. 21 contains epoxy resin and organic carboxylic acid. In contrast, the resin coating of Test No. 1 contains epoxy resin but does not contain organic carboxylic acid. That is, a resin coating containing epoxy resin and organic carboxylic acid is capable of striking a balance between excellent galling resistance and resistance to being loosened of an oil-well metal pipe and capable of keeping resistance of the threaded connection to being loosened for a long time even in a case where fastening and loosening are repeated.

It is unclear why a resin coating containing epoxy resin and organic carboxylic acid is capable of increasing galling resistance of a threaded connection and capable of keeping resistance of the threaded connection to being loosened even in a case where fastening and loosening are repeated. However, the following possibility is conceivable. When epoxy resin and organic carboxylic acid coexist, carboxyl groups in organic carboxylic acids combine with epoxy groups in the epoxy resin through an addition reaction by sliding heat that is produced in fastening or loosening. The union of the epoxy resin and the organic carboxylic acids works as follows. OH groups included in a chain of the epoxy resin of the union form hydrogen bonds with OH groups on a metal surface of the thread, which moderately prevents the resin coating from being peeled off from a surface of the thread and the thread from being loosened. Chains of hydrocarbon of the organic carboxylic acids at terminals of a molecular chain of the union have a lubricating ability for metal, thus increasing galling resistance.

Although the reason described above is speculation, Example described later proves that a resin coating containing epoxy resin and organic carboxylic acid is capable of increasing galling resistance of an oil-well metal pipe and further capable of keeping resistance of the threaded connection to being loosened even in a case where fastening and loosening are repeated.

The gist of the oil-well metal pipe according to the present embodiment that is made based on the findings described above is as follows.

[1] An oil-well metal pipe, including:
   a pipe body that includes a first end portion and a second end portion, wherein
   the pipe body includes:
      a pin that is formed at the first end portion; and
      a box that is formed at the second end portion,
   the pin includes a pin contact surface that includes an external thread part,
   the box includes a box contact surface that includes an internal thread part,
   the oil-well metal pipe further includes:
      a resin coating formed as an uppermost layer on the pin contact surface and/or on the box contact surface, and
      the resin coating contains:
         epoxy resin; and
         organic carboxylic acid.
[2] The oil-well metal pipe according to [1], wherein the organic carboxylic acid is aliphatic carboxylic acid.
[3] The oil-well metal pipe according to [1] or [2], wherein the organic carboxylic acid contains five or more carbons.
[4] The oil-well metal pipe according to any one of [1] to [3], wherein the organic carboxylic acid contains ten or less carbons.
[5] The oil-well metal pipe according to any one of [1] to [4], wherein the organic carboxylic acid is monocarboxylic acid.
[6] The oil-well metal pipe according to any one of [1] to [5], wherein the organic carboxylic acid includes a branched chain hydrocarbon group.
[7] The oil-well metal pipe according to any one of [1] to [6], wherein
   the organic carboxylic acid is one or more types selected from the group consisting of
   2,2-dimethylpropanoic acid, 3,5,5-trimethylhexanoic acid, 2-ethylhexanoic acid, 2-ethyl-2,3-dimethylhexanoic acid, 2-ethyl-2,4-dimethylhexanoic acid, 2-ethyl-2,5-dimethylhexanoic acid, 2-ethyl-3,4-dimethylhexanoic acid, 2-ethyl-3,5-dimethylhexanoic acid, 2-ethyl-4,5-dimethylhexanoic acid, 2-ethyl-3,3-dimethylhexanoic acid, 2-ethyl-4,4-dimethylhexanoic acid, 2-ethyl-5,5-dimethylhexanoic acid, 3-ethyl-2,3-dimethylhexanoic acid, 3-ethyl-2,4-dimethylhexanoic acid, 3-ethyl-2,5-dimethylhexanoic acid, 3-ethyl-3,4-dimethylhexanoic acid, 3-ethyl-3,5-dimethylhexanoic acid, 3-ethyl-4,5-dimethylhexanoic acid, 3-ethyl-2,2-dimethylhexanoic acid, 3-ethyl-4,4-dimethylhexanoic acid, 3-ethyl-5,5-dimethylhexanoic acid, 4-ethyl-2,3-dimethylhexanoic acid, 4-ethyl-2,4-dimethylhexanoic acid, 4-ethyl-2,5-dimethylhexanoic acid, 4-ethyl-3,4-dimethylhexanoic acid, 4-ethyl-3,5-dimethylhexanoic acid, 4-ethyl-4,5-dimethylhexanoic acid, 4-ethyl-2,2-dimethylhexanoic acid, 4-ethyl-3,3-dimethylhexanoic acid, 4-ethyl-5,5-dimethylhexanoic acid, 2-ethyl-2-methylheptanoic acid, 3-ethyl-3-methylheptanoic acid, 4-ethyl-4-methylheptanoic acid, 5-ethyl-5-methylheptanoic acid, 2,2-dimethyloctanoic acid, 3,3-dimethyloctanoic acid, 4,4-dimethyloctanoic acid, 5,5-dimethyloctanoic acid, 6,6-dimethyloctanoic acid, 7,7-dimethyloctanoic acid, 2,3-dimethyloctanoic acid, 2,4-dimethyloctanoic acid, 2,5-dimethyloctanoic acid, 2,6-dimethyloctanoic acid, 2,7-dimethyloctanoic acid, 3,4-dimethyloctanoic acid, 3,5-dimethyloctanoic acid, 3,6-dimethyloctanoic acid, 3,7-dimethyloctanoic acid, 4,5-dimethyloctanoic acid, 4,6-dimethyloctanoic acid, 4,7-dimethyloctanoic acid, 5,6-dimethyloctanoic acid, 5,7-dimethyloctanoic acid, 6,7-dimethyloctanoic acid, octanoic acid, nonanoic acid, decanoic acid, 2,2,3,5-tetramethylhexanoic acid, and 2,4-dimethyl-2-isopropylpentanoic acid.
[8] The oil-well metal pipe according to any one of [1] to [7], further including between the resin coating and the pin contact surface and/or the box contact surface, one or more types selected from the group consisting of a metal plating layer, and a chemical conversion treatment layer.

An oil-well metal pipe according to the present embodiment will be described below in detail.

### [Configuration of Oil-Well Metal Pipe]

First, a configuration of the oil-well metal pipe in the present embodiment will be described. The oil-well metal pipe has a well-known configuration. Oil-well metal pipe includes oil-well metal pipe of a T & C type and oil-well metal pipe of an integral type. An oil-well metal pipe of each type will be described below in detail.

### [Case Where Oil-Well Metal Pipe Is of T & C Type]

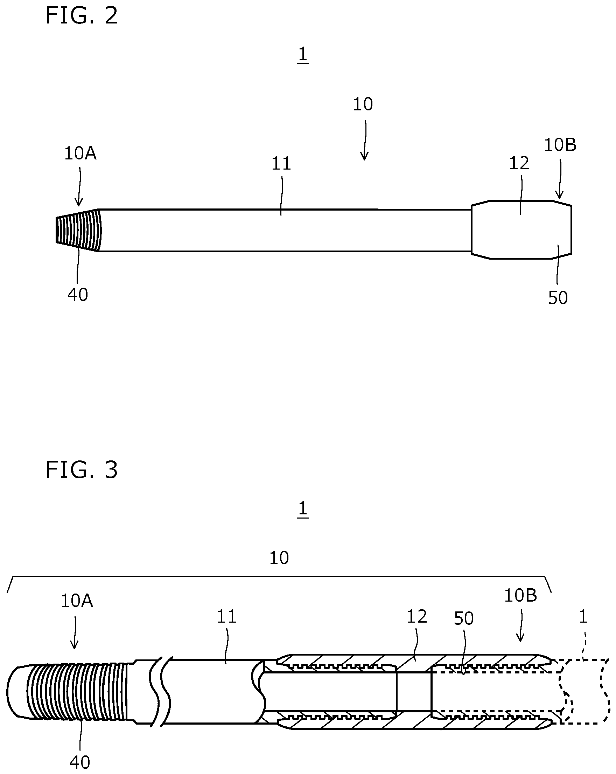

FIG. 2 is a side view of an oil-well metal pipe 1 according to the present embodiment. FIG. 2 is a side view of the oil-well metal pipe 1, which is of what is called threaded-and-coupled (T & C) type. Referring to FIG. 2, the oil-well metal pipe 1 includes a pipe body 10.

The pipe body 10 extends in a pipe axis direction. A cross section of the pipe body 10 perpendicular to the pipe axis direction has a round shape. The pipe body 10 includes a first end portion 10A and a second end portion 10B. The first end portion 10A is an end portion on an opposite side to the second end portion 10B. In the oil-well metal pipe 1 of the T & C type illustrated in FIG. 2, the pipe body 10 includes a pin pipe body 11 and a coupling 12. The coupling 12 is attached to one end of the pin pipe body 11. More specifically, the coupling 12 is fastened to the one end of the pin pipe body 11 with a thread.

FIG. 3 is a fragmentary sectional view illustrating a cross section of the oil-well metal pipe 1 illustrated in FIG. 2 parallel to a pipe axis direction of the coupling 12 (longitudinal section). Referring to FIG. 2 and FIG. 3, the pipe body 10 includes a pin 40 and a box 50. The pin 40 is formed at the first end portion 10A of the pipe body 10. In fastening, the pin 40 is inserted into a box 50 of another oil-well metal pipe 1 (not illustrated) and fastened to the box 50 of the other oil-well metal pipe 1 with a thread.

The box 50 is formed at the second end portion 10B of the pipe body 10. In fastening, into the box 50, a pin 40 of another oil-well metal pipe 1 is inserted, and the box 50 is fastened to the pin 40 of the other oil-well metal pipe 1 with a thread.

### [Configuration of Pin]

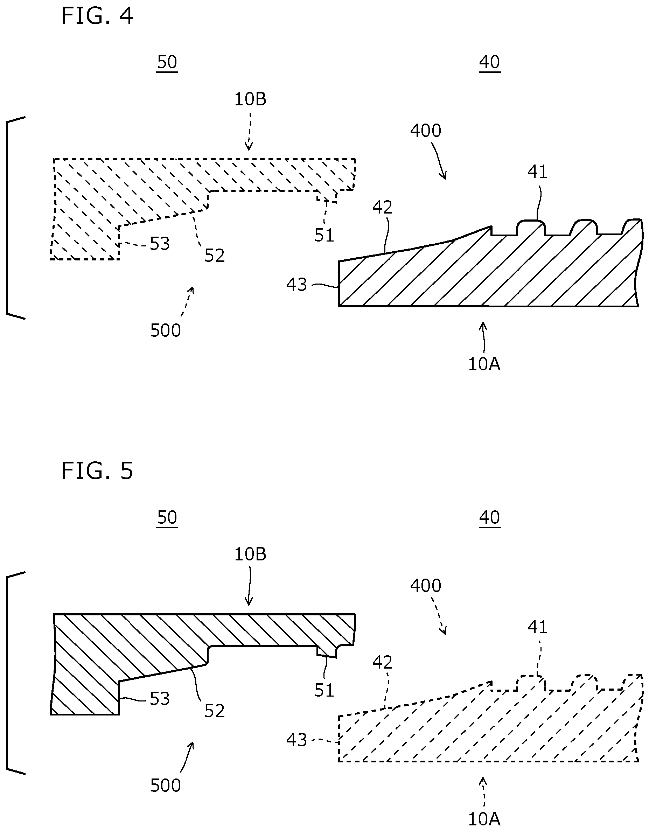

FIG. 4 is a sectional view of a vicinity of the pin 40 of the oil-well metal pipe 1 illustrated in FIG. 3, the sectional view being parallel to a pipe axis direction of the oil-well metal pipe 1. In a case where the oil-well metal pipe 1 is fastened to another oil-well metal pipe 1, a region enclosed by broken lines in FIG. 4 illustrates a configuration of the box 50 of the other oil-well metal pipe 1. Referring to FIG. 4, the pin 40 includes a pin contact surface 400 on an outer peripheral surface of the first end portion 10A of the pipe body 10. When the oil-well metal pipe 1 is being fastened to the other oil-well metal pipe 1, the pin contact surface 400 is screwed into the box 50 of the other oil-well metal pipe 1 to come into contact with a box contact surface 500 (described later) of the box 50.

The pin contact surface 400 includes at least an external thread part 41 that is formed on the outer peripheral surface of the first end portion 10A. The pin contact surface 400 may further include a pin seal surface 42 and a pin shoulder surface 43. In FIG. 4, the pin shoulder surface 43 is disposed on a front end surface of the first end portion 10A, and the pin seal surface 42 is disposed on the outer peripheral surface of the first end portion 10A in such a manner that the pin seal surface 42 is closer to a front end of the first end portion 10A than the external thread part 41. That is, the pin seal surface 42 is disposed between the external thread part 41 and the pin shoulder surface 43. The pin seal surface 42 is provided being tapered. Specifically, at the pin seal surface 42, an outer diameter of the first end portion 10A is gradually decreased as the first end portion 10A extends from the external thread part 41 toward the pin shoulder surface 43 in a longitudinal direction (the pipe axis direction) of the first end portion 10A.

When the oil-well metal pipe 1 is being fastened to the other oil-well metal pipe 1, the pin seal surface 42 comes into contact with a box seal surface 52 (described later) of the box 50 of the other oil-well metal pipe 1. More specifically, in fastening, insertion of the pin 40 into the box 50 of the other oil-well metal pipe 1 causes the pin seal surface 42 to come into contact with the box seal surface 52. Then, further screwing of the pin 40 into the box 50 of the other oil-well metal pipe 1 brings the pin seal surface 42 into intimate contact with the box seal surface 52. In fastening, the pin seal surface 42 thus comes into intimate contact with the box seal surface 52 to form a seal based on metal-metal contact. This enables gastightness to be increased in the oil-well metal pipe 1 fastened to each other.

In FIG. 4, the pin shoulder surface 43 is disposed on the front end surface of the first end portion 10A. That is, in the pin 40 illustrated in FIG. 4, the external thread part 41, the pin seal surface 42, and the pin shoulder surface 43 are disposed in this order from a middle of the pipe body 10 toward the first end portion 10A. When the oil-well metal pipe 1 is being fastened to the other oil-well metal pipe 1, the pin shoulder surface 43 faces and comes into contact with a box shoulder surface 53 (described later) of the box 50 of the other oil-well metal pipe 1. More specifically, in fastening, insertion of the pin 40 into the box 50 of the other oil-well metal pipe 1 causes the pin shoulder surface 43 to come into contact with the box shoulder surface 53. This enables high torque to be provided in fastening. In addition, a positional relationship between the pin 40 and the box 50 in fastening state can be stabilized.

Note that the pin contact surface 400 of the pin 40 includes at least the external thread part 41. That is, the pin contact surface 400 includes the external thread part 41 and need not include the pin seal surface 42 and the pin shoulder surface 43. The pin contact surface 400 may include the external thread part 41 and the pin shoulder surface 43 and need not include the pin seal surface 42. The pin contact surface 400 may include the external thread part 41 and the pin seal surface 42 and need not include the pin shoulder surface 43.

### [Configuration of Box]

FIG. 5 is a sectional view of a vicinity of the box 50 of the oil-well metal pipe 1 illustrated in FIG. 3, the sectional view being parallel to the pipe axis direction of the oil-well metal pipe 1. In a case where the oil-well metal pipe 1 is fastened to another oil-well metal pipe 1, a region enclosed by broken lines in FIG. 5 illustrates a configuration of a pin 40 of the other oil-well metal pipe 1. Referring to FIG. 5, the box 50 includes the box contact surface 500 on an inner peripheral surface of the second end portion 10B of the pipe body 10. When the oil-well metal pipe 1 is being fastened to the other oil-well metal pipe 1, the pin 40 of the other oil-well metal pipe 1 is screwed into the box contact surface 500 and the box contact surface 500 comes into contact with a pin contact surface 400 of the pin 40.

The box contact surface 500 includes at least an internal thread part 51 that is formed on the inner peripheral surface of the second end portion 10B. In fastening, the internal thread part 51 meshes with the external thread part 41 of the pin 40 of the other oil-well metal pipe 1.

The box contact surface 500 may further include the box seal surface 52 and the box shoulder surface 53. In FIG. 5, the box seal surface 52 is disposed on the inner peripheral surface of the second end portion 10B in such a manner that the box seal surface 52 is closer to the pipe body 10 than the internal thread part 51. That is, the box seal surface 52 is disposed between the internal thread part 51 and the box shoulder surface 53. The box seal surface 52 is provided being tapered. Specifically, at the box seal surface 52, an inner diameter of the second end portion 10B is gradually decreased as the second end portion 10B extends from the internal thread part 51 toward the box shoulder surface 53 in a longitudinal direction (the pipe axis direction) of the second end portion 10B.

When the oil-well metal pipe 1 is being fastened to the other oil-well metal pipe 1, the box seal surface 52 comes into contact with the pin seal surface 42 of the pin 40 of the other oil-well metal pipe 1. More specifically, in fastening, screwing of the pin 40 of the other oil-well metal pipe 1 into the box 50 causes the box seal surface 52 to come into contact with the pin seal surface 42, and further screwing of the pin 40 brings the box seal surface 52 into intimate contact with the pin seal surface 42. In fastening, the box seal surface 52 thus comes into intimate contact with the pin seal surface 42 to form a seal based on metal-metal contact. This enables gastightness to be increased in the oil-well metal pipe 1 fastened to each other.

The box shoulder surface 53 is disposed closer to the pipe body 10 than the box seal surface 52. That is, in the box 50, the box shoulder surface 53, the box seal surface 52, and the internal thread part 51 are disposed in this order from the middle of the pipe body 10 toward a front end of the second end portion 10B. When the oil-well metal pipe 1 is being fastened to the other oil-well metal pipe 1, the box shoulder surface 53 faces and comes into contact with the pin shoulder surface 43 of the pin 40 of the other oil-well metal pipe 1. More specifically, in fastening, insertion of the pin 40 of the other oil-well metal pipe 1 into the box 50 causes the box shoulder surface 53 to come into contact with the pin shoulder surface 43. This enables high torque to be provided in fastening. In addition, the positional relationship between the pin 40 and the box 50 in fastening state can be stabilized.

The box contact surface 500 includes at least the internal thread part 51. In fastening, the internal thread part 51 of the box contact surface 500 of the box 50 corresponds to the external thread part 41 of the pin contact surface 400 of the pin 40 and comes into contact with the external thread part 41. The box seal surface 52 corresponds to the pin seal surface 42 and comes into contact with the pin seal surface 42. The box shoulder surface 53 corresponds to the pin shoulder surface 43 and comes into contact with the pin shoulder surface 43.

In a case where the pin contact surface 400 includes the external thread part 41 and does not include the pin seal surface 42 and the pin shoulder surface 43, the box contact surface 500 includes the internal thread part 51 and does not include the box seal surface 52 and the box shoulder surface 53. In a case where the pin contact surface 400 includes the external thread part 41 and the pin shoulder surface 43 and does not include the pin seal surface 42, the box contact surface 500 includes the internal thread part 51 and the box shoulder surface 53 and does not include the box seal surface 52. In a case where the pin contact surface 400 includes the external thread part 41 and the pin seal surface 42 and does not include the pin shoulder surface 43, the box contact surface 500 includes the internal thread part 51 and the box seal surface 52 and does not include the box shoulder surface 53.

The pin contact surface 400 may include a plurality of external thread parts 41, may include a plurality of pin seal surfaces 42, and may include a plurality of pin shoulder surfaces 43. For example, on the pin contact surface 400 of the pin 40, the pin shoulder surface 43, the pin seal surface 42, the external thread part 41, the pin seal surface 42, the pin shoulder surface 43, the pin seal surface 42, and the external thread part 41 may be disposed in this order from the front end of the first end portion 10A toward the middle of the pipe body 10. In this case, on the box contact surface 500 of the box 50, the internal thread part 51, the box seal surface 52, the box shoulder surface 53, the box seal surface 52, the internal thread part 51, the box seal surface 52, and the box shoulder surface 53 are disposed in this order from the front end of the second end portion 10B toward the middle of the pipe body 10.

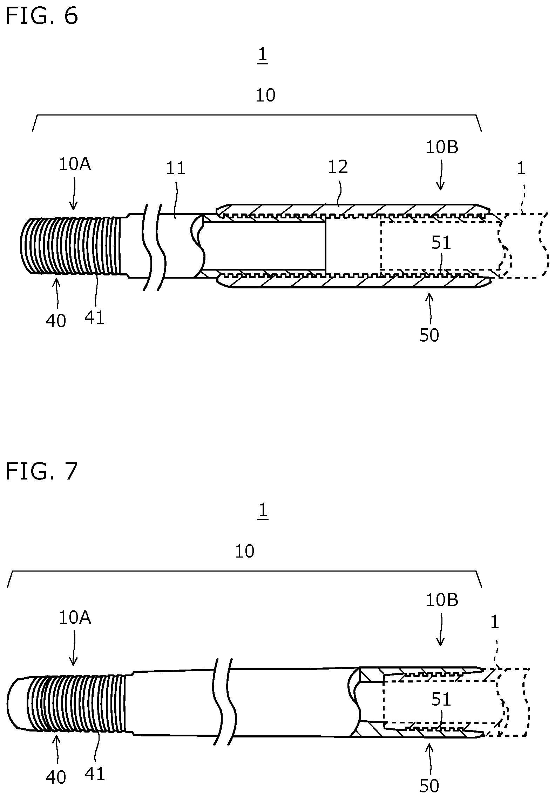

FIG. 4 and FIG. 5 each illustrate what is called premium threaded connection in which the pin 40 includes the external thread part 41, the pin seal surface 42, and the pin shoulder surface 43, and the box 50 includes the internal thread part 51, the box seal surface 52, and the box shoulder surface 53. However, as described above, the pin 40 includes the external thread part 41 and need not include the pin seal surface 42 and the pin shoulder surface 43. In this case, the box 50 includes the internal thread part 51 and does not include the box seal surface 52 and the box shoulder surface 53. FIG. 6 is a fragmentary sectional view including a longitudinal section of an oil-well metal pipe in the present embodiment, the oil-well metal pipe having another configuration and being different from that illustrated in FIG. 2.

### [Case Where Oil-Well Metal Pipe Is of Integral Type]

The oil-well metal pipe 1 illustrated in FIG. 2, FIG. 3, and FIG. 6 is oil-well metal pipe 1 of what is called T & C type in which the pipe body 10 includes the pin pipe body 11 and the coupling 12. However, the oil-well metal pipe 1 in the present embodiment may be of the integral type rather than the T & C type.

FIG. 7 is a fragmentary sectional view including a longitudinal section of an oil-well metal pipe 1 with integral type threaded connection according to the present embodiment. Referring to FIG. 7, the oil-well metal pipe 1 of the integral type includes a pipe body 10. The pipe body 10 includes a first end portion 10A and a second end portion 10B. The first end portion 10A is disposed on an opposite side to the second end portion 10B. As described above, in the oil-well metal pipe 1 of the T & C type, the pipe body 10 includes the pin pipe body 11 and the coupling 12. That is, in the oil-well metal pipe 1 of the T & C type, the pipe body 10 is formed by fastening the two separate members (the pin pipe body 11 and the coupling 12). In contrast, in the oil-well metal pipe 1 of the integral type, the pipe body 10 is formed as a single piece.

A pin 40 is formed at the first end portion 10A of the pipe body 10. In fastening, the pin 40 is inserted and screwed into a box 50 of another oil-well metal pipe 1 of the integral type to be fastened to the box 50 of the other oil-well metal pipe 1 of the integral type. The box 50 is formed at the second end portion 10B of the pipe body 10. In fastening, the pin 40 of another oil-well metal pipe 1 of the integral type is inserted and screwed into the box 50, and the box 50 is fastened to the pin 40 of the other oil-well metal pipe 1 of the integral type.

A configuration of the pin 40 of the oil-well metal pipe 1 of the integral type is the same as the configuration of the pin 40 of the oil-well metal pipe 1 of the T & C type illustrated in FIG. 4. Likewise, a configuration of the box 50 of the oil-well metal pipe 1 of the integral type is the same as the configuration of the box 50 of the oil-well metal pipe 1 of the T & C type illustrated in FIG. 5. According to FIG. 4 and FIG. 5, in the pin 40, the pin shoulder surface 43, the pin seal surface 42, and the external thread part 41 are disposed in this order from the front end of the first end portion 10A toward the middle of the pipe body 10. Therefore, in the box 50, the internal thread part 51, the box seal surface 52, and the box shoulder surface 53 are disposed in this order from the front end of the second end portion 10B toward the middle of the pipe body 10. However, as with the pin contact surface 400 of the pin 40 of the oil-well metal pipe 1 of the T & C type, the pin contact surface 400 of the pin 40 of the oil-well metal pipe 1 of the integral type need only include at least the external thread part 41. Further, as with the box contact surface 500 of the box 50 of the oil-well metal pipe 1 of the T & C type, the box contact surface 500 of the box 50 of the oil-well metal pipe 1 of the integral type need only include at least the internal thread part 51.

In summary, the oil-well metal pipe 1 in the present embodiment may be of the integral type or may be of the T & C type.

### [Resin Coating]

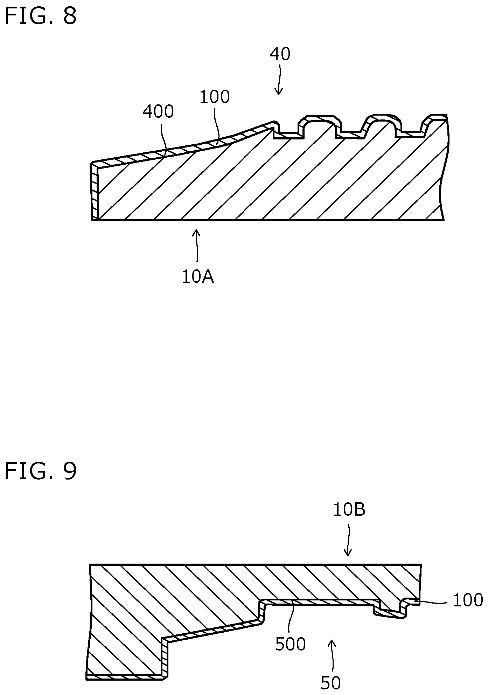

The oil-well metal pipe 1 according to the present embodiment includes a resin coating 100 formed as an uppermost layer on the pin contact surface 400 and/or on the box contact surface 500. FIG. 8 is a sectional view of a vicinity of the pin contact surface 400 of the oil-well metal pipe 1 according to the present embodiment. FIG. 9 is a sectional view of a vicinity of the box contact surface 500 corresponding to FIG. 8.

Referring to FIG. 8, the resin coating 100 may be formed as an uppermost layer on the pin contact surface 400. In this case, the resin coating 100 may be formed or need not be formed on or above the corresponding box contact surface 500. Referring to FIG. 9, the resin coating 100 may be formed as an uppermost layer on the box contact surface 500. In this case, the resin coating 100 may be formed or need not be formed on or above the corresponding pin contact surface 400. In summary, the oil-well metal pipe 1 according to the present embodiment includes the resin coating 100 that is formed as an uppermost layer on any one of the pin contact surface 400 and the box contact surface 500. The resin coating 100 is only required to be formed as an uppermost layer on at least a part of the pin contact surface 400 or the box contact surface 500 (e.g., only the pin seal surface 42 or the box seal surface 52).

The resin coating 100 contains epoxy resin. Although a content of the epoxy resin in the resin coating 100 is not particularly limited, the content of the epoxy resin in the resin coating 100 is, for example, 15 to 80 mass%. When a content of the epoxy resin in the resin coating 100 is 15 mass% or more, the resin coating 100 can be formed more stably. On the other hand, when the content of the epoxy resin in the resin coating 100 is 80 mass% or less, a predetermined coating thickness can be kept more stably. Therefore, in order to form a predetermined coating thickness stably, the content of the epoxy resin in the resin coating 100 is preferably 15 to 80 mass%. A lower limit of the content of the epoxy resin in the resin coating 100 is more preferably 18 mass%, still more preferably 20 mass%, still more preferably 25 mass%, and even still more preferably 30 mass%. An upper limit of the content of the epoxy resin in the resin coating 100 is more preferably 70 mass%, still more preferably 65 mass%, and even still more preferably 60 mass%.

### [Method for Measuring Content of Epoxy Resin]

The content of the epoxy resin in the resin coating 100 is measured by reflux extraction using solvent (Soxhlet extraction). Specifically, the resin coating 100 is subjected to the reflux extraction using ethyl methyl ketone as the solvent. Specifically, the resin coating 100 is scraped off from the pin contact surface 400 or the box contact surface 500 in an amount necessary for the measurement and subjected to the reflux extraction. The reflux extraction is performed on five resin coatings 100 each being 20 µm thick, 120 mm long, and 15 mm wide, using 0.4 L of ethyl methyl ketone for 4 hours. When a thickness of the resin coating 100 is more than 20 µm, the number of the resin coatings 100 is adjusted in such a manner that the resin coatings 100 have the same volume as the resin coating 100 described above. Likewise, when a thickness of the resin coating 100 is less than 20 µm, the number of the resin coatings 100 is adjusted in such a manner that the resin coatings 100 have the same volume as the resin coating 100 described above. A weight of the resin coating 100 after the reflux extraction is equivalent to a weight of the epoxy resin. Therefore, by dividing the weight of the resin coating 100 after the reflux extraction by a weight of the resin coating 100 before the reflux extraction, the content of the epoxy resin in the resin coating 100 is determined.

### [Organic Carboxylic Acid]

Organic carboxylic acid is a carboxylic acid that includes a hydrocarbon group. When the resin coating 100 contains epoxy resin and organic carboxylic acid, a friction coefficient of the resin coating 100 can be kept within a range that enables increasing galling resistance of a threaded connection and resistance to being loosened in a case where fastening and loosening are repeated.

The organic carboxylic acid may be aliphatic carboxylic acid or may be aromatic carboxylic acid. The organic carboxylic acid preferably includes a chain hydrocarbon group.

When the organic carboxylic acid contains five or more carbons, molecules of the organic carboxylic acid are large. Therefore, after the resin coating 100 is hardened, what is called "bleed out", in which molecules of organic carboxylic acid weave through a network of three-dimensional cross-linked epoxy resin, rise to a surface of the resin coating 100, and come out of the resin coating 100, is prevented. For that reason, when the organic carboxylic acid contains five or more carbons, the effect provided by the coexistence of the epoxy resin and the organic carboxylic acid can be provided more stably. Therefore, the organic carboxylic acid contains preferably five or more carbons.

On the other hand, when the organic carboxylic acid contains ten or less carbons, the organic carboxylic acid tends to be dissolved in water. In this case, the organic carboxylic acid tends to disperse in a composition for forming the resin coating containing the epoxy resin. Therefore, the organic carboxylic acid contains preferably ten or less carbons. In other words, the organic carboxylic acid contains preferably five to ten carbons, because the epoxy resin and the organic carboxylic acid can coexist more stably.

When the organic carboxylic acid is monocarboxylic acid, compatibility of the organic carboxylic acid with the epoxy resin is increased. Therefore, the organic carboxylic acid is preferably monocarboxylic acid.

The aliphatic carboxylic acid is, for example, linear saturated monocarboxylic acid. The linear saturated monocarboxylic acid is, for example, one or more types selected from the group consisting of methanoic acid (formic acid), ethanoic acid (acetic acid), propionic acid (propionic acid), butanoic acid (butyric acid), pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, icosanoic acid, eicosanoic acid, henicosanoic acid, heneicosanoic acid, docosanoic acid, tricosanoic acid, tetracosanoic acid, pentacosanoic acid, hexacosanoic acid, heptacosanoic acid, octacosanoic acid, nonacosanoic acid, and triacontanoic acid.

In a case where the organic carboxylic acid includes a branched chain hydrocarbon group, the branched chain hydrocarbon group juts out in a lateral direction of a long chain of the organic carboxylic acid. The branched chain hydrocarbon group in the organic carboxylic acid tends to be entangled with a hydrocarbon group in the epoxy resin. It is considered that when the epoxy resin and a carboxylic acid having a branched chain hydrocarbon group come close to each other, intermolecular force makes it easy to entangle the epoxy resin and the carboxylic acid with each other, increasing the compatibility. The organic carboxylic acid therefore preferably includes a branched chain hydrocarbon group. At the same time, when a carbon number and/or a substitution number of the branched chain hydrocarbon group in the organic carboxylic acid is small, the organic carboxylic acid easily moves in a composition for forming the resin coating. When the organic carboxylic acid easily moves in the composition, reaction of the organic carboxylic acid with an epoxy group of the epoxy resin terminal is accelerated. It is considered that this results in a stable increase in lubricity in fastening and loosening. Accordingly, the branched chain hydrocarbon group is preferably one or more types selected from the group consisting of a methyl group, an ethyl group, a propyl group, and an isopropyl group. Further, when the branched chain hydrocarbon group is only a methyl group or an ethyl group, the substitution number of the branched chain hydrocarbon group in the organic carboxylic acid is preferably three or less. When the branched chain hydrocarbon group includes a propyl group or an isopropyl group, the substitution number of the branched chain hydrocarbon group in the organic carboxylic acid is preferably one.

The aliphatic carboxylic acid is, for example, a saturated monocarboxylic acid including a branched chain. The saturated monocarboxylic acid having a branched chain is, for example, one or more types selected from the group consisting of 2-methylpropionic acid, 2,2-dimethylpropanoic acid, 2-methylbutanoic acid, 3-methylbutanoic acid, 2,2-dimethyllbutanoic acid, 3,3-dimethyllbutanoic acid, 2,3-dimethyllbutanoic acid, 2,2,3-trimethylbutanoic acid, 2,3,3-trimethylbutanoic acid, 2-isopropylbutanoic acid, 2-methylpentanoic acid, 3-methylpentanoic acid, 4-methylpentanoic acid, 2-ethylpentanoic acid, 3-ethylpentanoic acid, 2-propylpentanoic acid, 2-isopropylpentanoic acid, 2,2-dimethylpentanoic acid, 3,3-dimethylpentanoic acid, 4,4-dimethylpentanoic acid, 2,3-dimethylpentanoic acid, 3,4-dimethylpentanoic acid, 2,4-dimethylpentanoic acid, 2,2-diethylpentanoic acid, 3,3-diethylpentanoic acid, 2,3-diethylpentanoic acid, 2-methyl-3-ethylpentanoic acid, 2-ethyl-2-methylpentanoic acid, 2-ethyl-3-methylpentanoic acid, 2-ethyl-4-methylpentanoic acid, 3-ethyl-2-methylpentanoic acid, 3-ethyl-3-methylpentanoic acid, 3-ethyl-4-methylpentanoic acid, 2,2,3-trimethylpentanoic acid, 2,2,4-trimethylpentanoic acid, 2,3,3-trimethylpentanoic acid, 3,3,4-trimethylpentanoic acid, 2,3,4-trimethylpentanoic acid, 2-ethyl-2,3-dimethylpentanoic acid, 2-ethyl-2,4-dimethylpentanoic acid, 2-ethyl-3,3-dimethylpentanoic acid, 2-ethyl-3,4-dimethylpentanoic acid, 2-ethyl-4,4-dimethylpentanoic acid, 3-ethyl-2,2-dimethylpentanoic acid, 3-ethyl-2,3-dimethylpentanoic acid, 3-ethyl-2,4-dimethylpentanoic acid, 3-ethyl-3,4-dimethylpentanoic acid, 3-ethyl-4,4-dimethylpentanoic acid, 2,2-diethyl-3-methylpentanoic acid, 2,2-diethyl-4-methylpentanoic acid, 2,3-diethyl-2-methylpentanoic acid, 2,3-diethyl-3-methylpentanoic acid, 2,3-diethyl-4-methylpentanoic acid, 3,3-diethyl-4-methylpentanoic acid, 2-methylhexanoic acid, 3-methylhexanoic acid, 4-methylhexanoic acid, 5-methylhexanoic acid, 2-ethylhexanoic acid, 3-ethylhexanoic acid, 4-ethylhexanoic acid, 2-propylhexanoic acid, 3-propylhexanoic acid, 2-isopropylhexanoic acid, 3-isopropylhexanoic acid, 2,2-dimethylhexanoic acid, 3,3-dimethylhexanoic acid, 4,4-dimethylhexanoic acid, 5,5-dimethylhexanoic acid, 2,3-dimethylhexanoic acid, 2,4-dimethylhexanoic acid, 2,5-dimethylhexanoic acid, 3,4-dimethylhexanoic acid, 3,5-dimethylhexanoic acid, 4,5-dimethylhexanoic acid, 2,2-diethylhexanoic acid, 3,3-diethylhexanoic acid, 4,4-diethylhexanoic acid, 2,3-diethylhexanoic acid, 2,4-diethylhexanoic acid, 3,4-diethylhexanoic acid, 2-ethyl-2-methylhexanoic acid, 2-ethyl-3-methylhexanoic acid, 2-ethyl-4-methylhexanoic acid, 2-ethyl-5-methylhexanoic acid, 3-ethyl-2-methylhexanoic acid, 3-ethyl-3-methylhexanoic acid, 3-ethyl-4-methylhexanoic acid, 3-ethyl-5-methylhexanoic acid, 4-ethyl-2-methylhexanoic acid, 4-ethyl-3-methylhexanoic acid, 4-ethyl-4-methylhexanoic acid, 4-ethyl-5-methylhexanoic acid, 2,2,3-trimethylhexanoic acid, 2,2,4-trimethylhexanoic acid, 2,2,5-trimethylhexanoic acid, 2,3,3-trimethylhexanoic acid, 3,3,4-trimethylhexanoic acid, 3,3,5-trimethylhexanoic acid, 2,4,4-trimethylhexanoic acid, 3,4,4-trimethylhexanoic acid, 4,4,5-trimethylhexanoic acid, 2,5,5-trimethylhexanoic acid, 3,5,5-trimethylhexanoic acid, 4,5,5-trimethylhexanoic acid, 2,3,4-trimethylhexanoic acid, 3,4,5-trimethylhexanoic acid, 2,3,5-trimethylhexanoic acid, 2,4,5-trimethylhexanoic acid, 2-ethyl-2,3-dimethylhexanoic acid, 2-ethyl-2,4-dimethylhexanoic acid, 2-ethyl-2,5-dimethylhexanoic acid, 2-ethyl-3,4-dimethylhexanoic acid, 2-ethyl-3,5-dimethylhexanoic acid, 2-ethyl-4,5-dimethylhexanoic acid, 2-ethyl-3,3-dimethylhexanoic acid, 2-ethyl-4,4-dimethylhexanoic acid, 2-ethyl-5,5-dimethylhexanoic acid, 3-ethyl-2,3-dimethylhexanoic acid, 3-ethyl-2,4-dimethylhexanoic acid, 3-ethyl-2,5-dimethylhexanoic acid, 3-ethyl-3,4-dimethylhexanoic acid, 3-ethyl-3,5-dimethylhexanoic acid, 3-ethyl-4,5-dimethylhexanoic acid, 3-ethyl-2,2-dimethylhexanoic acid, 3-ethyl-4,4-dimethylhexanoic acid, 3-ethyl-5,5-dimethylhexanoic acid, 4-ethyl-2,3-dimethylhexanoic acid, 4-ethyl-2,4-dimethylhexanoic acid, 4-ethyl-2,5-dimethylhexanoic acid, 4-ethyl-3,4-dimethylhexanoic acid, 4-ethyl-3,5-dimethylhexanoic acid, 4-ethyl-4,5-dimethylhexanoic acid, 4-ethyl-2,2-dimethylhexanoic acid, 4-ethyl-3,3-dimethylhexanoic acid, 4-ethyl-5,5-dimethylhexanoic acid, 2-methylheptanoic acid, 3-methylheptanoic acid, 4-methylheptanoic acid, 5-methylheptanoic acid, 6-methylheptanoic acid, 2-ethylheptanoic acid, 3-ethylheptanoic acid, 4-ethylheptanoic acid, 5-ethylheptanoic acid, 2,2-dimethylheptanoic acid, 3,3-dimethylheptanoic acid, 4,4-dimethylheptanoic acid, 5,5-dimethylheptanoic acid, 6,6-dimethylheptanoic acid, 2,3-dimethylheptanoic acid, 3,4-dimethylheptanoic acid, 4,5-dimethylheptanoic acid, 5,6-dimethylheptanoic acid, 2,4-dimethylheptanoic acid, 2,5-dimethylheptanoic acid, 2,6-dimethylheptanoic acid, 3,5-dimethylheptanoic acid, 3,6-dimethylheptanoic acid, 4,6-dimethylheptanoic acid, 2,2,3-trimethylheptanoic acid, 2,2,4-trimethylheptanoic acid, 2,2,5-trimethylheptanoic acid, 2,2,6-trimethylheptanoic acid, 2,3,3-trimethylheptanoic acid, 3,3,4-trimethylheptanoic acid, 3,3,5-trimethylheptanoic acid, 3,3,6-trimethylheptanoic acid, 2,4,4-trimethylheptanoic acid, 3,4,4-trimethylheptanoic acid, 4,4,5-trimethylheptanoic acid, 4,4,6-trimethylheptanoic acid, 2,5,5-trimethylheptanoic acid, 3,5,5-trimethylheptanoic acid, 4,5,5-trimethylheptanoic acid, 5,5,6-trimethylheptanoic acid, 2,6,6-trimethylheptanoic acid, 3,6,6-trimethylheptanoic acid, 4,6,6-trimethylheptanoic acid, 5,6,6-trimethylheptanoic acid, 2,3,4-trimethylheptanoic acid, 3,4,5-trimethylheptanoic acid, 4,5,6-trimethylheptanoic acid, 2,4,5-trimethylheptanoic acid, 2,5,6-trimethylheptanoic acid, 2,3,6-trimethylheptanoic acid, 2,3,5-trimethylheptanoic acid, 2,4,6-trimethylheptanoic acid, 3,4,6-trimethylheptanoic acid, 3,5,6-trimethylheptanoic acid, 2-ethyl-2-methylheptanoic acid, 2-ethyl-3-methylheptanoic acid, 2-ethyl-4-methylheptanoic acid, 2-ethyl-5-methylheptanoic acid, 2-ethyl-6-methylheptanoic acid, 3-ethyl-2-methylheptanoic acid, 3-ethyl-3-methylheptanoic acid, 3-ethyl-4-methylheptanoic acid, 3-ethyl-5-methylheptanoic acid, 3-ethyl-6-methylheptanoic acid, 4-ethyl-2-methylheptanoic acid, 4-ethyl-3-methylheptanoic acid, 4-ethyl-4-methylheptanoic acid, 4-ethyl-5-methylheptanoic acid, 4-ethyl-6-methylheptanoic acid, 5-ethyl-2-methylheptanoic acid, 5-ethyl-3-methylheptanoic acid, 5-ethyl-4-methylheptanoic acid, 5-ethyl-5-methylheptanoic acid, 5-ethyl-6-methylheptanoic acid, 2-methyloctanoic acid, 3-methyloctanoic acid, 4-methyloctanoic acid, 5-methyloctanoic acid, 6-methyloctanoic acid, 7-methyloctanoic acid, 2,2-dimethyloctanoic acid, 3,3-dimethyloctanoic acid, 4,4-dimethyloctanoic acid, 5,5-dimethyloctanoic acid, 6,6-dimethyloctanoic acid, 7,7-dimethyloctanoic acid, 2,3-dimethyloctanoic acid, 2,4-dimethyloctanoic acid, 2,5-dimethyloctanoic acid, 2,6-dimethyloctanoic acid, 2,7-dimethyloctanoic acid, 3,4-dimethyloctanoic acid, 3,5-dimethyloctanoic acid, 3,6-dimethyloctanoic acid, 3,7-dimethyloctanoic acid, 4,5-dimethyloctanoic acid, 4,6-dimethyloctanoic acid, 4,7-dimethyloctanoic acid, 5,6-dimethyloctanoic acid, 5,7-dimethyloctanoic acid, 6,7-dimethyloctanoic acid, 2-methylnonanoic acid, 3-methylnonanoic acid, 4-methylnonanoic acid, 5-methylnonanoic acid, 6-methylnonanoic acid, 7-methylnonanoic acid, 8-methylnonanoic acid, 2,2,3,5-tetramethylhexanoic acid, and 2,4-dimethyl-2-isopropylpentanoic acid.

When the organic carboxylic acid is a saturated monocarboxylic acid including a branched chain and further the carboxylic acid contains five or more carbons, the organic carboxylic acid has the low effect on the environment and no objectionable odors. Furthermore, as described above, when the organic carboxylic acid contains ten or less carbons, the organic carboxylic acid tends to be dissolved in water. Therefore, the organic carboxylic acid is more preferably a saturated monocarboxylic acid including a branched chain and further the carboxylic acid contains five to ten carbons.

The aliphatic carboxylic acid is, for example, linear saturated dicarboxylic acid. The linear saturated dicarboxylic acid is, for example, one or more types selected from the group consisting of oxalic acid, malonic acid, succinic acid, glutaric acid, adipic acid, 1,7-heptanedicarboxylic acid, 1,8-octanedicarboxylic acid, 1,9-nonanedicarboxylic acid, 1,10-decanedicarboxylic acid, 1,11-undecanedicarboxylic acid, 1,12-dodecanedicarboxylic acid, 1,13-tridecanedicarboxylic acid, 1,14-tetradecanedicarboxylic acid, 1,15-pentadecanedicarboxylic acid, 1,16-hexadecanedicarboxylic acid, 1,17-heptadecanedicarboxylic acid, 1,18-octadecanedicarboxylic acid, 1,19-nonadecanedicarboxylic acid, and 1,20-eicosanedicarboxylic acid.

The aliphatic carboxylic acid is, for example, unsaturated carboxylic acid. The unsaturated carboxylic acid is, for example, one or more types selected from the group consisting of acrylic acid, 2-butenoic acid, 3-butenoic acid, 2-pentenoic acid, 3-pentenoic acid, 4-pentenoic acid, 2-hexenoic acid, 3-hexenoic acid, 4-hexenoic acid, 5-hexenoic acid, 2-heptenoic acid, 3-heptenoic acid, 4-heptenoic acid, 5-heptenoic acid, 6-heptenoic acid, 2-octenoic acid, 3-octenoic acid, 4-octenoic acid, 5-octenoic acid, 6-octenoic acid, 7-octenoic acid, 2-nonenoic acid, 3-nonenoic acid, 4-nonenoic acid, 5-nonenoic acid, 6-nonenoic acid, 7-nonenoic acid, 8-nonenoic acid, 2-decenoic acid, 3-decenoic acid, 4-decenoic acid, 5-decenoic acid, 6-decenoic acid, 7-decenoic acid, 8-decenoic acid, and 9-decenoic acid.

The aromatic carboxylic acid is, for example, one or more types selected from the group consisting of benzoic acid, phthalic acid, isophthalic acid, terephthalic acid, and salicylic acid.

The organic carboxylic acid is more preferably one or more types selected from the group consisting of 2,2-dimethylpropanoic acid, 3,5,5-trimethylhexanoic acid, 2-ethylhexanoic acid, 2-ethyl-2,3-dimethylhexanoic acid, 2-ethyl-2,4-dimethylhexanoic acid, 2-ethyl-2,5-dimethylhexanoic acid, 2-ethyl-3,4-dimethylhexanoic acid, 2-ethyl-3,5-dimethylhexanoic acid, 2-ethyl-4,5-dimethylhexanoic acid, 2-ethyl-3,3-dimethylhexanoic acid, 2-ethyl-4,4-dimethylhexanoic acid, 2-ethyl-5,5-dimethylhexanoic acid, 3-ethyl-2,3-dimethylhexanoic acid, 3-ethyl-2,4-dimethylhexanoic acid, 3-ethyl-2,5-dimethylhexanoic acid, 3-ethyl-3,4-dimethylhexanoic acid, 3-ethyl-3,5-dimethylhexanoic acid, 3-ethyl-4,5-dimethylhexanoic acid, 3-ethyl-2,2-dimethylhexanoic acid, 3-ethyl-4,4-dimethylhexanoic acid, 3-ethyl-5,5-dimethylhexanoic acid, 4-ethyl-2,3-dimethylhexanoic acid, 4-ethyl-2,4-dimethylhexanoic acid, 4-ethyl-2,5-dimethylhexanoic acid, 4-ethyl-3,4-dimethylhexanoic acid, 4-ethyl-3,5-dimethylhexanoic acid, 4-ethyl-4,5-dimethylhexanoic acid, 4-ethyl-2,2-dimethylhexanoic acid, 4-ethyl-3,3-dimethylhexanoic acid, 4-ethyl-5,5-dimethylhexanoic acid, 2-ethyl-2-methylheptanoic acid, 3-ethyl-3-methylheptanoic acid, 4-ethyl-4-methylheptanoic acid, 5-ethyl-5-methylheptanoic acid, 2,2-dimethyloctanoic acid, 3,3-dimethyloctanoic acid, 4,4-dimethyloctanoic acid, 5,5-dimethyloctanoic acid, 6,6-dimethyloctanoic acid, 7,7-dimethyloctanoic acid, 2,3-dimethyloctanoic acid, 2,4-dimethyloctanoic acid, 2,5-dimethyloctanoic acid, 2,6-dimethyloctanoic acid, 2,7-dimethyloctanoic acid, 3,4-dimethyloctanoic acid, 3,5-dimethyloctanoic acid, 3,6-dimethyloctanoic acid, 3,7-dimethyloctanoic acid, 4,5-dimethyloctanoic acid, 4,6-dimethyloctanoic acid, 4,7-dimethyloctanoic acid, 5,6-dimethyloctanoic acid, 5,7-dimethyloctanoic acid, 6,7-dimethyloctanoic acid, octanoic acid, nonanoic acid, decanoic acid, 2,2,3,5-tetramethylhexanoic acid, and 2,4-dimethyl-2-isopropylpentanoic acid.

The organic carboxylic acid may include, in addition to a carboxyl group, another functional group. The other functional group is, for example, one or more types selected from the group consisting of hydroxy group, aldehyde group, amino group, carbonyl group, ether linkage, ester linkage, nitro group, and sulfo group. The organic carboxylic acid may be a compound of a chain hydrocarbon group and a carboxyl group.

When a content of the organic carboxylic acid in the resin coating 100 is 0.2 mass% or more, the effects of the organic carboxylic acid can be provided more stably. On the other hand, when the content of the organic carboxylic acid in the resin coating 100 is 20 mass% or less, the resin coating 100 can be formed more stably. Therefore, the content of the organic carboxylic acid in the resin coating 100 is, for example, 0.2 to 20 mass%. A lower limit of the content of the organic carboxylic acid in the resin coating 100 is preferably 0.5 mass%, more preferably 1.0 mass%, and still more preferably 2.0 mass%. An upper limit of the content of the organic carboxylic acid in the resin coating 100 is preferably 15 mass%, more preferably 10 mass%, still more preferably 8.0 mass%, even still more preferably 5.0 mass%, and even still more preferably 4.0 mass%.

### [Method for Measuring Content of Organic Carboxylic Acid]

The content of the organic carboxylic acid in the resin coating 100 is measured by performing reflux extraction (Soxhlet extraction) on the resin coating 100 and then performing liquid chromatography/mass spectrometry (LC/MS). Specifically, the resin coating 100 is scraped off from the pin contact surface 400 or the box contact surface 500 in an amount necessary for the measurement and subjected to the reflux extraction. The reflux extraction is performed on five resin coatings 100 each being 20 µm thick, 120 mm long, and 15 mm wide, using 0.4 L of ethanol for 4 hours. When a thickness of the resin coating 100 is more than 20 µm, the number of the resin coatings 100 is adjusted in such a manner that the resin coatings 100 have the same volume as the resin coating 100 described above. Likewise, when a thickness of the resin coating 100 is less than 20 µm, the number of the resin coatings 100 is adjusted in such a manner that the resin coatings 100 have the same volume as the resin coating 100 described above. After the reflux extraction, the ethanol is subjected to quantitative analysis by the LC/MS to determine the content of the organic carboxylic acid in the resin coating 100. If the extraction fails because the organic carboxylic acid is not dissolved in the ethanol, the content of the organic carboxylic acid in the resin coating 100 is determined by performing the reflux extraction likewise using ethyl methyl ketone as the solvent.

### [Lubricative Material]

The resin coating 100 may contain lubricative material. The lubricative material is not limited to a specific material, and a material that increases lubricity of the resin coating 100 suffices. For example, the lubricative material may be graphite, may be zinc oxide, may be boron nitride, may be talc, may be molybdenum disulfide, may be tungsten disulfide, may be graphite fluoride, may be stannic sulfide, may be bismuth sulfide, may be organomolybdenum, may be thiosulfate, may be polytetrafluoroethylene (PTFE), may be melamine cyanurate (MCA), or may be perfluoropolyether (PFPE). Further, a plurality of types of the lubricative materials described above may be contained in combination. A content of the lubricative material in the resin coating 100 is, for example, 0.1 to 25 mass%.

### [Another Material]

The resin coating 100 may contain another material. For example, the other material may be pigment, may be antirust addition agent, or may be antiseptic. A content of the other material in the resin coating 100 is, for example, 0.1 to 25 mass%.

### [Thickness of Resin Coating]

A thickness of the resin coating 100 is not limited to a specific thickness. The thickness of the resin coating 100 is, for example, 1 to 100 µm.

### [Location of Resin Coating]

In the present embodiment, the resin coating 100 is formed as an uppermost layer on the pin contact surface 400 and/or on the box contact surface 500. In other words, the resin coating 100 in the present embodiment may be formed as the outermost layer on the pin contact surface 400 and may be formed as the outermost layer on the box contact surface 500. In the present embodiment, when the resin coating 100 is formed as an uppermost layer on the pin contact surface 400, a lubricant coating other than the resin coating 100 according to the present embodiment may be formed as an uppermost layer on the box contact surface 500. And further, in the present embodiment, when the resin coating 100 is formed as an uppermost layer on the box contact surface 500, a lubricant coating other than the resin coating 100 according to the present embodiment may be formed as an uppermost layer on the pin contact surface 400. Furthermore, in the present embodiment, the resin coating 100 is formed as an uppermost layer on both the pin contact surface 400 and the box contact surface 500.

When a lubricant coating other than the resin coating 100 is formed, a lubricant coating other than the resin coating 100 is not particularly limited and a well-known lubricant coating. The lubricant coating may be, for example, a resin coating which contains thermosetting resin as typified by epoxy resin as a binder, a resin coating which contains thermoplastic resin as typified by polyamide resin as a binder, and a lubricant coating which is present in a grease form or semisolid form and contains a mineral oil as a base material. In other words, even when a lubricant coating can have applicability to the oil-well metal pipe 1, a well-known lubricant coating can be used.

Further, the resin coating 100 may be formed as an uppermost layer on the whole of or only one part of the pin contact surface 400 and/or the box contact surface 500. In a case where the pipe main body 10 has the pin seal surface 42, the box seal surface 52, the pin shoulder surface 43, and the box shoulder surface 53, the interfacial pressure at the seal surfaces 42 and 52 and at the shoulder surfaces 43 and 53 increases in the final stage of fastening in particular. Accordingly, in a case where the resin coating 100 is to be partially formed as an uppermost layer on the contact surfaces 400 and/or 500 that have the seal surfaces 42 and 52 and shoulder surfaces 43 and 53, the resin coating 100 may be formed as an uppermost layer on at least one location among the seal surfaces 42 and 52 and shoulder surfaces 43 and 53. On the other hand, if the resin coating 100 is formed as an uppermost layer on the whole of the contact surfaces 400 and/or 500, the production efficiency with respect to the oil-well metal pipe 1 will increase.

### [Other Layers]

In the oil-well metal pipe 1 according to the present embodiment, a layer or layers other than the resin coating 100 may be formed on or above the contact surface 400 and/or 500. The other layers are, for example, a metal plating layer and a chemical conversion treatment layer.

### [Metal Plating Layer 110]

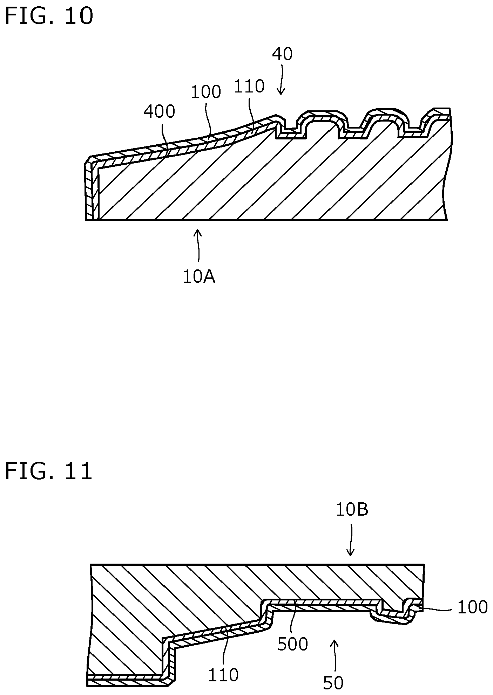

The oil-well metal pipe 1 according to the present embodiment may, in addition, include a metal plating layer between the resin coating 100 and the pin contact surface 400 and/or the box contact surface 500. Specifically, referring to FIG. 10, a metal plating layer 110 may be formed as an underlayer of the resin coating 100 on the pin contact surface 400. Similarly, referring to FIG. 11, the metal plating layer 110 may be formed as an underlayer of the resin coating 100 on the box contact surface 500. Thus, in the case of forming both the resin coating 100 and the metal plating layer 110, the metal plating layer 110 is to be formed between the pin contact surface 400 and/or the box contact surface 500, and the resin coating 100.

In the present embodiment, the type of the metal plating layer 110 is not particularly limited. Further, the metal plating layer 110 may be constituted by a single plating layer, or may be constituted by a multi-layer plating layer (double plating layer or triple plating layer). In a case where the metal plating layer 110 is a single plating layer, the metal plating layer 110 is, for example, a single plating layer composed of Cu, Sn, or Ni metal, or a single plating layer composed of a Zn-Ni alloy, a Cu-Sn alloy, or a Cu-Sn-Zn alloy. In a case where the metal plating layer 110 is a multi-layer plating layer, the metal plating layer 110 is, for example, a double plating layer composed of a Cu layer and a Sn layer, a triple plating layer composed of a Ni layer, a Cu layer and a Sn layer, or a multi-layer plating layer formed by combining the aforementioned single plating layers.

### [Chemical Conversion Treatment Layer 120]

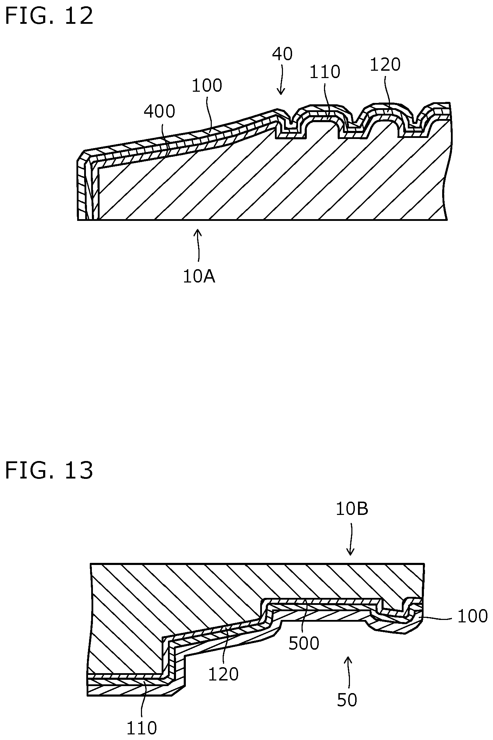

The oil-well metal pipe 1 according to the present embodiment may also include a chemical conversion treatment layer that is provided between the pin contact surface 400 and/or the box contact surface 500, and the resin coating 100, and which has a surface that contacts the resin coating 100. Specifically, referring to FIG. 12, a chemical conversion treatment layer 120 may be formed as an underlayer of the resin coating 100, on the metal plating layer 110 that is formed on the pin contact surface 400. Further, referring to FIG. 13, the chemical conversion treatment layer 120 may be formed as an underlayer of the resin coating 100, on the metal plating layer 110 that is formed on the box contact surface 500. Similarly, although not illustrated in the drawing, on the pin contact surface 400, the chemical conversion treatment layer 120 may be formed as an underlayer of the resin coating 100. Likewise, although not illustrated in the drawing, on the box contact surface 500, the chemical conversion treatment layer 120 may be formed as an underlayer of the resin coating 100.

In the present embodiment, the type of the chemical conversion treatment layer 120 is not particularly limited. For example, the chemical conversion treatment layer 120 is a phosphate chemical conversion treatment layer, an oxalate chemical conversion treatment layer, a borate chemical conversion treatment layer, a chromate chemical conversion treatment layer, or a zirconium chemical conversion treatment layer. Here, the chemical conversion treatment layer 120 is porous. Therefore, if the resin coating 100 is formed on the chemical conversion treatment layer 120, the adhesiveness of the resin coating 100 is further increased by the so-called "anchoring effect". Further, in the present embodiment, the thickness of the chemical conversion treatment layer 120 is not particularly limited. A preferable thickness of the chemical conversion treatment layer 120 according to the present embodiment is 5 to 40 µm.

### [Blast-Treated Surface or Pickled Surface]

In the oil-well metal pipe 1 according to the present embodiment, the contact surface 400 and/or 500 may be subjected to a blasting treatment or pickling. In other words, in the oil-well metal pipe 1, a surface which the resin coating 100 is formed as an uppermost layer may be a blast-treated surface or a pickled surface. That is, in the pipe main body 10 of the oil-well metal pipe 1, the contact surface 400 and/or 500 may be subjected to a blasting treatment or pickling, and the resin coating 100 may be formed thereon. Further, in a case where the oil-well metal pipe 1 includes the metal plating layer 110, the contact surface 400 and/or 500 of the oil-well metal pipe 1 may be subjected to a blasting treatment or pickling, the metal plating layer 110 may be provided thereon, and the resin coating 100 may be provided on or above the metal plating layer 110. In addition, in a case where the oil-well metal pipe 1 includes the metal plating layer 110, the oil-well metal pipe 1 may include the metal plating layer 110 that was subjected to a blasting treatment or pickling, and may include the resin coating 100 thereon.

### [Chemical Composition of Pipe Body]

A chemical composition of the pipe body 10 of the oil-well metal pipe 1 according to the present embodiment is not limited to a specific chemical composition. That is, in the present embodiment, a steel type of the pipe main body 10 of the oil-well metal pipe 1 is not limited to a specific steel type. The pipe body 10 may be formed of, for example, carbon steel, stainless steel, alloy steel, or the like. That is, the pipe main body 10 may be a pipe made of an Fe-based alloy or may be an alloy pipe typified by a Ni-based alloy pipe. Here, the pipe is, for example, a low alloy pipe, a martensitic stainless steel pipe, a ferritic stainless steel pipe, an austenitic stainless steel pipe, a duplex stainless steel pipe, or the like. Examples of the alloy pipe include a Ni-based alloy pipe and a NiCrFe alloy pipe.

Among alloys, so-called "high alloys" such as Ni-based alloys and duplex stainless steels that contain alloying elements such as Cr, Ni and Mo have high corrosion resistance. Therefore, if these high alloys are used as the pipe main body 10, excellent corrosion resistance will be obtained in a corrosive environment that contains hydrogen sulfide or carbon dioxide or the like.

### [Production Method]

A method for producing the oil-well metal pipe 1 according to the present embodiment will be described below.

The method for producing the oil-well metal pipe 1 according to the present embodiment includes a preparation step, a composition application step, and a composition hardening step.

### [Preparation Step]

In the preparation step, oil-well metal pipe 1 provided with a pipe body 10 that includes a pin 40 having a pin contact surface 400 including an external thread part 41 and includes a box 50 having a box contact surface 500 including an internal thread part 51 is prepared. As described above, the oil-well metal pipe 1 according to the present embodiment has a well-known configuration. That is, in the preparation step, it is only required to prepare oil-well metal pipe 1 having a well-known configuration.

### [Composition Application Step]

In the composition application step, a composition that contains unreacted epoxy resin, an epoxy curing agent and the organic carboxylic acid is applied to the pin contact surface 400 and/or the box contact surface 500, or applied to on the metal plating layer 110 which is formed by the step described below, or applied to on the chemical conversion treatment layer 120 which is formed by the step described below. The composition is a composition for forming the resin coating 100 described above. The composition contains unreacted epoxy resin, an epoxy curing agent and the organic carboxylic acid. Note that, in the present description, the term "unreacted epoxy resin" means monomers, oligomers, prepolymers, or mixtures thereof containing unreacted epoxy groups in each molecule. In addition to the unreacted epoxy resin, an epoxy curing agent and the organic carboxylic acid, the composition may contain solvent. The composition of the composition for forming the resin coating 100 except the solvent is the same as the composition of the resin coating 100 described above. Here, the epoxy curing agent is not particularly limited, and well-known epoxy curing agents can be used according to the type of the epoxy resin.

The composition is produced by dissolving or dispersing the unreacted epoxy resin, an epoxy curing agent and the organic carboxylic acid into the solvent and mixing them together. The solvent is, for example, one or more types selected from the group consisting of water, alcohol, and organic solvent. The solvent may contain a trace of surface active agent. A proportion of the solvent is not limited to a specific proportion. The proportion of the solvent is only required to be adjusted such that the composition has a proper viscosity for an application method. The proportion of the solvent is, for example, 40 to 100 mass% when a total of all components except the solvent is taken as 100 mass%.

A method for applying the composition to the pin contact surface 400 and/or the box contact surface 500 is not limited to a specific method, and a well-known application method suffices. For example, the composition in its solution status can be applied to the pin contact surface 400 and/or the box contact surface 500 by spraying. In this case, a viscosity of the composition is adjusted so that the composition can be subjected to spray application under a normal-temperature, normal-pressure environment. In place of the spray application, the method for applying the composition to the pin contact surface 400 and/or the box contact surface 500 may be brush application, immersion, or the like.

### [Composition Hardening Step]

In the composition hardening step, the applied composition is hardened to form the resin coating 100. Conditions for the hardening treatment are well-known conditions. A time until complete hardening varies according to a composition of the composition, especially the type of epoxy curing agent and a coating thickness. For example, when using normal temperature and short time hardening-type epoxy curing agents, and a content of the unreacted epoxy resin in the composition is about 30 mass%, the time until complete hardening is 3 to 16 hours at 5 to 30°C or 5 to 180 minutes at 30 to 70°C. For example, when using high temperature hardening-type epoxy curing agents, the time until complete hardening is 1 to 4 hours at 150 to 240°C after 0.5 to 2 hours at 50 to 100°C.

Here, when the organic carboxylic acid contained the composition is a dicarboxylic acid, the temperature of heat treatment in the composition hardening step is preferably low. If the organic carboxylic acid is a dicarboxylic acid and the temperature of the heat treatment is too high, since the hardening by the cross-linking is too high, the resin coating 100 is excessively hardened. Therefore, when the organic carboxylic acid contained the composition is a dicarboxylic acid, the temperature of heat treatment in the composition hardening step is, for example, preferably 100°C or less.

By the production method described above, the oil-well metal pipe 1 according to the present embodiment can be produced.

### [The Other Steps]

Steps for producing the oil-well metal pipe 1 according to the present embodiment may include the other steps. The other steps are, for example, one or more types selected from the group consisting of a blasting treatment step, a pickling treatment step, a metal plating step, and a chemical conversion treatment step.

### [Blasting Treatment Step]

Steps for producing the oil-well metal pipe 1 according to the present embodiment may further include a blasting treatment step before the composition application step. In the present embodiment, the blasting treatment is, for example, a treatment in which particles are caused to collide with an object using a blasting device. The blasting treatment is, for example, a sand blasting treatment. The sand blasting treatment is a treatment in which a blast material (abrasive) and compressed air are mixed together and propelled at an object. Examples of the blast material include spherical shot material and angular grit material. By performing the sand blasting treatment, the surface roughness of the contact surface 400 and/or 500 or the surface of the metal plating layer 110 can be increased.

In the present embodiment, the sand blasting treatment can be carried out by a well-known method. In the sand blasting treatment, for example, air is compressed by a compressor, and a blast material is mixed with the compressed air. The blast material may be made of, for example, stainless steel, aluminum, ceramic, or alumina. Further, the sand blasting treatment conditions such as the propelling speed can be set as appropriate.

### [Pickling Treatment Step]

Steps for producing the oil-well metal pipe 1 according to the present embodiment may further include a pickling treatment step before the composition application step. In the present embodiment, the term "pickling treatment step" means a treatment in which a surface is immersed in a strong acid solution such as sulfuric acid, hydrochloric acid, nitric acid, or hydrofluoric acid to roughen the surface. That is, by immersing the contact surface 400 and/or 500 or the surface of the metal plating layer 110 in a strong acid solution, the surface roughness of these surfaces can be increased.

### [Metal Plating Step]

The method for producing the oil-well metal pipe 1 according to the present embodiment may further include a metal plating step before the composition application step. The metal plating layer 110 can be formed, for example, by an electroplating treatment or an impact plating treatment.

### [Electroplating Treatment]

In the present embodiment, the electroplating treatment is a treatment that forms the metal plating layer 110 by electroplating. As described above, the metal plating layer 110 is, for example, a single plating layer composed of Cu, Sn, or Ni metal, or a single plating layer composed of a Zn-Ni alloy, a Cu-Sn alloy, or a Cu-Sn-Zn alloy, or a double plating layer composed of a Cu layer and a Sn layer, a triple plating layer composed of a Ni layer, a Cu layer and a Sn layer, or a multi-layer plating layer formed by combining the aforementioned single plating layers.

The electroplating treatment can be carried out by a well-known method. For example, a plating bath containing ions of the metallic elements to be contained in the alloy plating is prepared. Next, the contact surfaces 400 and/or 500 is immersed in the plating bath. Further, by current conduction through the contact surfaces 400 and/or 500, the metal plating layer 110 is formed on the contact surfaces 400 and/or 500. Conditions such as the temperature of the plating bath and the duration of the plating treatment can be set as appropriate.

More specifically, for example, in the case of forming a Cu-Sn-Zn alloy plating layer, the plating bath contains copper ions, tin ions and zinc ions. In this case, the composition of the plating bath is preferably Cu: 1 to 50 g/L, Sn: 1 to 50 g/L and Zn: 1 to 50 g/L. The electroplating conditions are, for example, a plating bath pH of 1 to 10, a plating bath temperature of 60°C, a current density of 1 to 100 A/dm², and a treatment time of 0.1 to 30 minutes.

Similarly, for example, in the case of forming a Zn-Ni alloy plating layer, the plating bath contains zinc ions and nickel ions. In this case, the composition of the plating bath is preferably Zn: 1 to 100 g/L and Ni: 1 to 50 g/L. The electroplating conditions are, for example, a plating bath pH of 1 to 10, a plating bath temperature of 60°C, a current density of 1 to 100 A/dm² and a treatment time of 0.1 to 30 minutes.

### [Impact Plating Treatment]

The impact plating treatment is a treatment that can be performed by mechanical plating in which particles and an object to be plated are caused to collide with each other in a rotating barrel, or by projection plating in which particles are caused to collide with an object to be plated using a blasting device.

### [Chemical Conversion Treatment Step]

The method for producing the oil-well metal pipe 1 according to the present embodiment may also include a chemical conversion treatment step before the composition application step. In the chemical conversion treatment step, a chemical conversion treatment is performed to form the chemical conversion treatment layer 120.

In the present embodiment, the chemical conversion treatment can be carried out by a well-known method. A common chemical conversion treatment solution can be used as the treatment solution. For example, a solution for zinc phosphate chemical conversion treatment containing 1 to 150 g/L of phosphate ions, 3 to 70 g/L of zinc ions, 1 to 100 g/L of nitrate ions, and 0 to 30 g/L of nickel ions can be used. Also, a manganese phosphate chemical conversion treatment solution can also be used. Further, a chromate treatment solution can also be used. It is also possible to use a chemical conversion treatment solution according to the chemical conversion treatment layer 120 desired to form. The temperature of the treatment solution is, for example, in the range of normal temperature to 100°C. The treatment time of the chemical conversion treatment can be appropriately set depending on the desired thickness, and for example is 15 minutes. In the case of forming a phosphate chemical conversion treatment layer, to facilitate the formation of the chemical conversion treatment layer, surface modification may be performed prior to the phosphate chemical conversion treatment. The term "surface modification" means a treatment in which immersion in a surface modification aqueous solution containing colloidal titanium is performed. After the phosphate chemical conversion treatment, it is preferable to perform rinsing with water or warm water, followed by drying.

Through the above steps, the oil-well metal pipe 1 according to the present embodiment is produced. However, the production method described above is merely an example of the method for producing the oil-well metal pipe 1 according to the present embodiment and should not be construed as limiting the method for producing the oil-well metal pipe 1 according to the present embodiment. The oil-well metal pipe 1 according to the present embodiment may be produced by another method.

### EXAMPLE

The effects of the oil-well metal pipe in the present embodiment will be described below more specifically with reference to Examples. Conditions described in Examples described below are an example of conditions that are adapted to confirm the feasibility and the effects of the oil-well metal pipe in the present embodiment. Therefore, the oil-well metal pipe in the present embodiment is not limited to this example of conditions.

Commercial cold-rolled steel sheets, which were assumed to be a pipe body of the oil-well metal pipe, were used. The cold-rolled steel sheets each measured 150 mm long and 70 mm wide. Their steel grade was a SPCC steel specified in JIS G 3141 (2021).

### [Composition Application Step]

Compositions were applied to surfaces of the cold-rolled steel sheets. The compositions contained the unreacted epoxy resin, the high temperature hardening-type epoxy curing agent, and the organic carboxylic acid shown in Table 1. In Table 1, the column "Compound Name" indicates types of the organic carboxylic acid contained. In Test No. 1, for which "-" is written in the column "Compound Name", the organic carboxylic acid was not contained. In Table 1, the column "Content (mass%)" indicates contents of the organic carboxylic acid in mass%. Compositions of Test Nos. 1 to 29 contain, in addition to the unreacted epoxy resin, the normal temperature hardening-type epoxy curing agent, and the organic carboxylic acid, water as the solvent.

### [Table 1]

**TABLE1**

| Test No. | Organic carboxylic acid | | Sliding distance (m) |
|---|---|---|---|
| | Compound Name | Content (mass%) | |
| 1 | - | 0.0 | 1.94 |
| 2 | 7,7-dimethyloctanoic acid | 0.7 | 4.17 |
| 3 | 7,7-dimethyloctanoic acid | 1.0 | 5.26 |
| 4 | 7,7-dimethyloctanoic acid | 2.0 | 3.89 |
| 5 | 7,7-dimethyloctanoic acid | 3.0 | 4.26 |
| 6 | 2,2-dimethyloctanoic acid | 0.7 | 3.50 |
| 7 | 2,2-dimethyloctanoic acid | 1.0 | 3.44 |
| 8 | 2,2-dimethyloctanoic acid | 2.0 | 3.89 |
| 9 | 2,2-dimethyloctanoic acid | 3.0 | 4.05 |
| 10 | 2-ethyl-2,5-dimethylhexanoic acid | 0.7 | 3.12 |
| 11 | 2-ethyl-2,5-dimethylhexanoic acid | 1.0 | 2.94 |
| 12 | 2-ethyl-2,5-dimethylhexanoic acid | 2.0 | 3.64 |
| 13 | 2-ethyl-2,5-dimethylhexanoic acid | 3.0 | 3.76 |
| 14 | 3,5,5-trimethylhexanoic acid | 0.7 | 2.66 |
| 15 | 3,5,5-trimethylhexanoic acid | 1.0 | 3.44 |
| 16 | 3,5,5-trimethylhexanoic acid | 2.0 | 3.14 |
| 17 | 3,5,5-trimethylhexanoic acid | 3.0 | 3.42 |
| 18 | Nonanoic acid | 0.7 | 3.84 |
| 19 | Nonanoic acid | 1.0 | 5.10 |
| 20 | Nonanoic acid | 2.0 | 5.15 |
| 21 | Nonanoic acid | 3.0 | 5.18 |
| 22 | 2-ethylhexanoic acid | 0.7 | 5.66 |
| 23 | 2-ethylhexanoic acid | 1.0 | 4.98 |
| 24 | 2-ethylhexanoic acid | 2.0 | 4.26 |
| 25 | 2-ethylhexanoic acid | 3.0 | 3.36 |
| 26 | 2,2-dimethylpropanoic acid | 0.7 | 3.11 |
| 27 | 2,2-dimethylpropanoic acid | 1.0 | 4.26 |
| 28 | 2,2-dimethylpropanoic acid | 2.0 | 3.95 |
| 29 | 2,2-dimethylpropanoic acid | 3.0 | 4.45 |

### [Composition Hardening Step]

A composition of each test number was thermoset. Specifically, a cold-rolled steel sheet with the composition applied thereto was placed in a heating furnace, heated at 50°C for 3 to 10 minutes, and then left still at room temperature for 24 hours. The resin coating was thereby formed.

### [Bowden Sliding Test]

A cold-rolled steel sheet of each test number with the resin coating formed thereon was subjected to the Bowden sliding test under the following conditions. A number of sliding strokes in which a friction coefficient (µ) was kept within the range of 0.25 or more to less than 0.40 without occurrence of galling was counted. Note that one to-and-fro sliding was counted as one sliding stroke. By multiplying the resultant number of sliding strokes by double the width of the sliding, a sliding distance (m) was determined. Results of the evaluation are shown in Table 1. Further, changes in friction coefficients of Test No. 1 and Test No. 21 during the test are illustrated in FIG. 1.
Steel ball: 3/16"SUJ2
Load: 3 kgf
Width of sliding: 10 mm or 14 mm
Speed of sliding: 4 mm/s
Lubricant: Not used (non oiling)
Test temperature: normal temperature (25°C)

### [Results of Evaluation]

Referring to Table 1 and FIG. 1, resin coatings of Test Nos. 2 to 29 contained the epoxy resin and the organic carboxylic acid. As a result, their sliding distances in which their friction coefficients were 0.25 or more to less than 0.40 were 2.00 m or more. It was found that the resin coatings of Test Nos. 2 to 29 are capable of increasing galling resistance of the oil-well metal pipe, and further capable of keeping resistance of a threaded connection to being loosened even in a case where fastening and loosening are repeated.

In contrast, the resin coating of Test No. 1 contained epoxy resin but did not contain organic carboxylic acid. As a result, its sliding distance in which its friction coefficient was 0.25 or more to less than 0.40 was less than 2.00 m. It was found that the resin coating of Test No. 1 is not capable of keeping resistance of a threaded connection to being loosened in a case where fastening and loosening are repeated.

An embodiment according to the present disclosure has been described above. However, the embodiment described above is merely an example of practicing the present disclosure. The present disclosure is therefore not limited to the embodiment described above, and the embodiment described above can be modified and practiced as appropriate without departing from the scope of the present invention.

### REFERENCE SIGNS LIST

- 1: oil-well metal pipe
- 10: pipe body
- 10A: first end portion
- 10B: second end portion
- 11: pin pipe body
- 12: coupling
- 40: pin
- 41: external thread part
- 42: pin seal surface
- 43: pin shoulder surface
- 50: box
- 51: internal thread part
- 52: box seal surface
- 53: box shoulder surface
- 100: resin coating
- 110: metal plating layer
- 120: chemical conversion treatment layer
- 400: pin contact surface
- 500: box contact surface

## Claims

1. An oil-well metal pipe, comprising
a pipe body that includes a first end portion and a second end portion, wherein
the pipe body includes:
a pin that is formed at the first end portion; and
a box that is formed at the second end portion,
the pin includes a pin contact surface that includes an external thread part,
the box includes a box contact surface that includes an internal thread part,
the oil-well metal pipe further comprises
a resin coating formed as an uppermost layer on the pin contact surface and/or on the box contact surface, and
the resin coating contains:
epoxy resin; and
organic carboxylic acid.

2. The oil-well metal pipe according to claim **1,** wherein
the organic carboxylic acid is aliphatic carboxylic acid.

3. The oil-well metal pipe according to claim 1 or claim 2, wherein
the organic carboxylic acid contains five or more carbons.

4. The oil-well metal pipe according to any one of claims 1 to 3, wherein
the organic carboxylic acid contains ten or less carbons.

5. The oil-well metal pipe according to any one of claims 1 to 4, wherein
the organic carboxylic acid is monocarboxylic acid.

6. The oil-well metal pipe according to any one of claims 1 to 5, wherein
the organic carboxylic acid includes a branched chain hydrocarbon group.

7. The oil-well metal pipe according to any one of claims 1 to 6, wherein
the organic carboxylic acid is one or more types selected from the group consisting of 2,2-dimethylpropanoic acid, 3,5,5-trimethylhexanoic acid, 2-ethylhexanoic acid, 2-ethyl-2,3-dimethylhexanoic acid, 2-ethyl-2,4-dimethylhexanoic acid, 2-ethyl-2,5-dimethylhexanoic acid, 2-ethyl-3,4-dimethylhexanoic acid, 2-ethyl-3,5-dimethylhexanoic acid, 2-ethyl-4,5-dimethylhexanoic acid, 2-ethyl-3,3-dimethylhexanoic acid, 2-ethyl-4,4-dimethylhexanoic acid, 2-ethyl-5,5-dimethylhexanoic acid, 3-ethyl-2,3-dimethylhexanoic acid, 3-ethyl-2,4-dimethylhexanoic acid, 3-ethyl-2,5-dimethylhexanoic acid, 3-ethyl-3,4-dimethylhexanoic acid, 3-ethyl-3,5-dimethylhexanoic acid, 3-ethyl-4,5-dimethylhexanoic acid, 3-ethyl-2,2-dimethylhexanoic acid, 3-ethyl-4,4-dimethylhexanoic acid, 3-ethyl-5,5-dimethylhexanoic acid, 4-ethyl-2,3-dimethylhexanoic acid, 4-ethyl-2,4-dimethylhexanoic acid, 4-ethyl-2,5-dimethylhexanoic acid, 4-ethyl-3,4-dimethylhexanoic acid, 4-ethyl-3,5-dimethylhexanoic acid, 4-ethyl-4,5-dimethylhexanoic acid, 4-ethyl-2,2-dimethylhexanoic acid, 4-ethyl-3,3-dimethylhexanoic acid, 4-ethyl-5,5-dimethylhexanoic acid, 2-ethyl-2-methylheptanoic acid, 3-ethyl-3-methylheptanoic acid, 4-ethyl-4-methylheptanoic acid, 5-ethyl-5-methylheptanoic acid, 2,2-dimethyloctanoic acid, 3,3-dimethyloctanoic acid, 4,4-dimethyloctanoic acid, 5,5-dimethyloctanoic acid, 6,6-dimethyloctanoic acid, 7,7-dimethyloctanoic acid, 2,3-dimethyloctanoic acid, 2,4-dimethyloctanoic acid, 2,5-dimethyloctanoic acid, 2,6-dimethyloctanoic acid, 2,7-dimethyloctanoic acid, 3,4-dimethyloctanoic acid, 3,5-dimethyloctanoic acid, 3,6-dimethyloctanoic acid, 3,7-dimethyloctanoic acid, 4,5-dimethyloctanoic acid, 4,6-dimethyloctanoic acid, 4,7-dimethyloctanoic acid, 5,6-dimethyloctanoic acid, 5,7-dimethyloctanoic acid, 6,7-dimethyloctanoic acid, octanoic acid, nonanoic acid, decanoic acid, 2,2,3,5-tetramethylhexanoic acid, and 2,4-dimethyl-2-isopropylpentanoic acid.

8. The oil-well metal pipe according to any one of claims 1 to 7, further including between the resin coating and the pin contact surface and/or the box contact surface, one or more types selected from the group consisting of a metal plating layer, and a chemical conversion treatment layer.
